# EUROPEAN PATENT SPECIFICATION

(11) **EP 4 502 757 B1**
(45) Date of publication and mention of the grant of the patent: **03.06.2026**
(21) Application number: 23784859.3
(22) Date of filing: 21.02.2023
(51) Int. Cl.: H04M 1/02, G06F 1/16, H02K 7/06, H02K 7/116, F16H 19/04

(54) **DRIVING STRUCTURE AND ELECTRONIC DEVICE COMPRISING SAME**
ANTRIEBSSTRUKTUR UND ELEKTRONISCHE VORRICHTUNG DAMIT
STRUCTURE D'ENTRAÎNEMENT ET DISPOSITIF ÉLECTRONIQUE LA COMPRENANT

(30) Priority: 06.04.2022 KR 20220043078; 15.07.2022 KR 20220087588
(43) Date of publication of application: 05.02.2025
(73) Proprietor: Samsung Electronics Co., Ltd., Suwon-si, Gyeonggi-do 16677 (KR)
(72) Inventor: CHO, Hyoungtak, Suwon-si Gyeonggi-do 16677 (KR); KANG, Jooyoung, Suwon-si Gyeonggi-do 16677 (KR); KANG, Hyunggwang, Suwon-si Gyeonggi-do 16677 (KR); KIM, Moonsun, Suwon-si Gyeonggi-do 16677 (KR); KIM, Junhyuk, Suwon-si Gyeonggi-do 16677 (KR); JEONG, Hoyoung, Suwon-si Gyeonggi-do 16677 (KR); JUNG, Hojin, Suwon-si Gyeonggi-do 16677 (KR); LEE, Junghyeob, Suwon-si Gyeonggi-do 16677 (KR)
(74) Representative: Walaski, Jan Filip
(86) International application number: PCT/KR2023/002469
(87) International publication number: WO 2023/195631

(56) References cited:
- WO-A1-2021/015310
- WO-A1-2021/206191
- WO-A1-2022/019357
- KR-A- 20190 062 855
- KR-A- 20210 118 850
- KR-A- 20210 146 865

## Description

### [Technical Field]

Various embodiments of the disclosure relate to an electronic device, e.g., a driving structure and an electronic device including the same.

### [Background Art]

Advancing information communication and semiconductor technologies accelerate the spread and use of various electronic devices. In particular, recent electronic devices are being developed to carry out communication while carried on.

Electronic device may refer to a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. These electronic devices have been downsized to be conveniently carried by users.

As mobile communication services extend up to multimedia service sectors, the display of the electronic device may be increased to allow the user satisfactory use of multimedia services as well as voice call or text messaging services. WO 2021/015310 A1 discloses a flexible display device which can be extended using a pinion gear and a rack. The rack comprises a gear and first and second locking jaws on the left and right of the gear, respectively. WO 2022/019357 A1 discloses a flexible display device where the size of the screen can be expanded. The expansion uses a pinion gear and a rack, where the rack comprises gear teeth and a guide rail extending laterally from the gear teeth.

### [Detailed Description of the Invention]

### [Technical Problem]

An electronic device (e.g., a portable terminal) may include a display with a flat surface or both a flat and curved surface. An electronic device including a display may have a limitation in realizing a screen larger than the size of the electronic device due to the fixed display structure. Accordingly, research has been conducted on electronic devices including a rollable display.

An electronic device with a rollable display may have its partial area extended or shrunken when slid.

An electronic device including a rollable display may be provided with a driving structure including a motor and a gear structure to implement a sliding operation. Such an electronic device is equipped with a plurality of electrical components for implementing a sliding operation inside a housing for the sliding operation and thus fails to secure a sufficient space inside the housing. Thus, a sufficient mounting space for a battery having a large size and/or a large capacity may not be secured.

According to various embodiments of the disclosure, there may be provided an electronic device capable of securing a mounting space for a battery inside the electronic device.

According to various embodiments of the disclosure, there may be provided a driving structure capable of reducing noise and/or vibration when an electronic device and/or a housing slides, and an electronic device including the same.

### [Technical Solution]

According to the invention, there is provided an electronic device according to claim 1. Preferred features are set out in the dependent claims.

### [Advantageous Effects]

According to various embodiments of the disclosure, it is possible to secure a mounting space for a battery inside an electronic device by downsizing a rack.

According to various embodiments of the disclosure, it is possible to reduce noise and/or vibration in an area where the gear structure and the housing connect to or contact each other when the electronic device and/or the housing slides.

Effects obtainable from the disclosure are not limited to the above-mentioned effects, and other effects not mentioned may be apparent to one of ordinary skill in the art from the following description.

### [Brief Description of Drawings]

FIG. 1 is a block diagram illustrating an electronic device in a network environment according to an embodiment;
FIG. 2 is a view illustrating a state in which a second display area of a display is received in a housing according to various embodiments of the disclosure.
FIG. 3 is a view illustrating a state in which a second display area of a display is exposed to the outside of a housing according to various embodiments of the disclosure;
FIG. 4 is an exploded perspective view illustrating an electronic device according to various embodiments of the disclosure.
FIG. 5A is a cross-sectional view taken along line A-A' of FIG. 2 according to various embodiments of the disclosure.
FIG. 5B is a cross-sectional view taken along line B-B' of FIG. 3 according to various embodiments of the disclosure.
FIG. 6A is a view illustrating a closed state of an electronic device according to various embodiments of the disclosure.
FIG. 6B is a view illustrating an opened state of an electronic device according to various embodiments of the disclosure.
FIG. 7A is a plan view illustrating a driving structure according to various embodiments of the disclosure;
FIG. 7B is a perspective view illustrating a rack gear and a pinion gear according to various embodiments of the disclosure;
FIG. 8 is a perspective view illustrating a driving structure in a state in which a gear bracket is separated according to various embodiments of the disclosure;
FIG. 9 is a perspective view illustrating a driving structure in a state in which a gear bracket is coupled according to various embodiments of the disclosure;
FIG. 10 is a cross-sectional view illustrating a partial area of a driving structure according to various embodiments of the disclosure;
FIG. 11A is a cross-sectional view taken along line A-A' of FIG. 6A according to various embodiments of the disclosure;
FIG. 11B is a cross-sectional view taken along line B-B' of FIG. 6A according to various embodiments of the disclosure; and
FIG. 12 is a view illustrating a rack gear and a pinion gear according to various embodiments of the disclosure.

### [Mode for Carrying out the Invention]

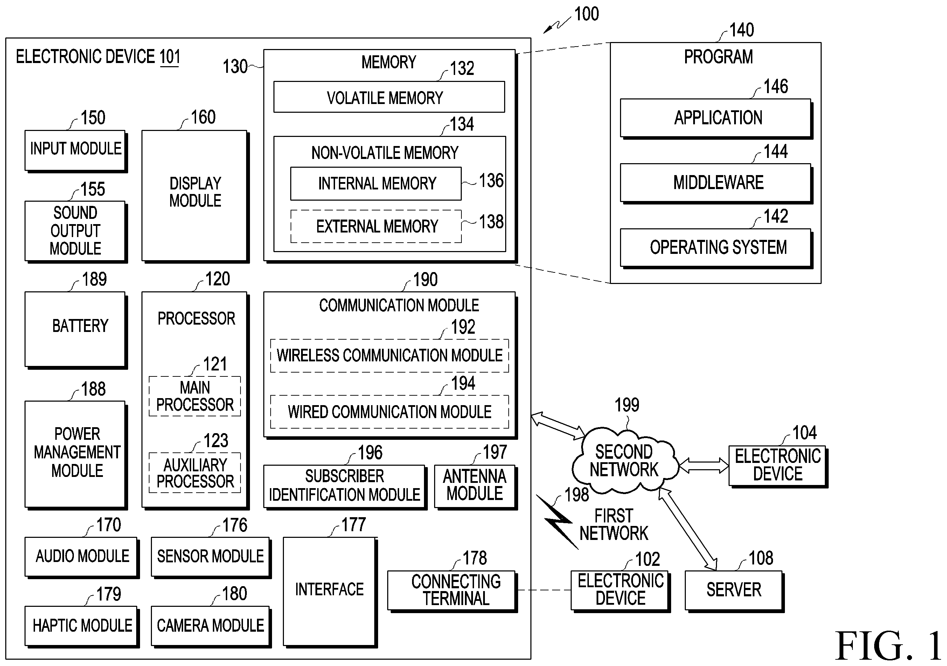

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Altematively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

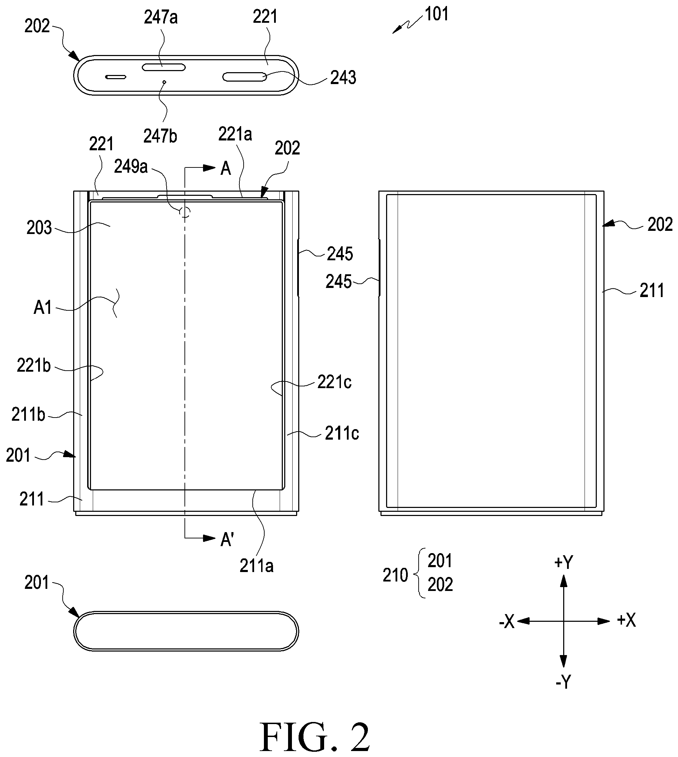

FIG. 2 is a view illustrating a state in which a second display area of a display is received in a housing according to various embodiments of the disclosure.

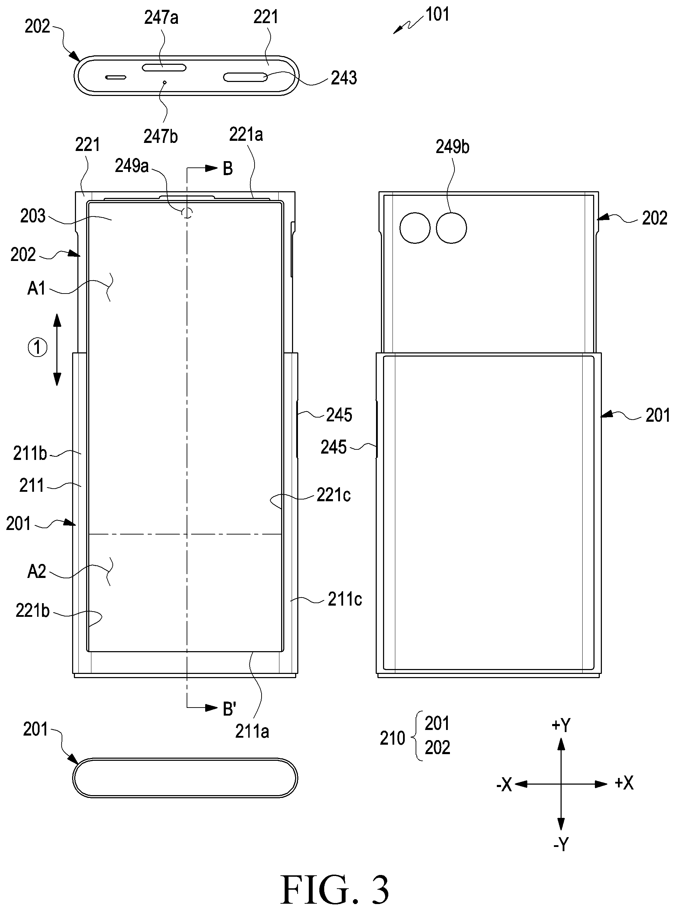

FIG. 3 is a view illustrating a state in which a second display area of a display is exposed to the outside of a housing according to various embodiments of the disclosure.

FIGS. 2 and 3 illustrate a structure in which the display 203 (e.g., flexible display or rollable display) is extended in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state shown in FIG. 2 may be referred to as a closed state of the electronic device 101 or housing 210 and a slide-in state of the display 203.

The state shown in FIG. 3 may be referred to as an opened state of the electronic device 101 or housing 210 and a slide-out state of the display 203.

Referring to FIGS. 2 and 3, the electronic device 101 may include a housing 210. The housing 210 may include a first housing **202** and a second housing 202 disposed to be movable relative to the first housing 201. According to an embodiment, the electronic device 101 may be interpreted as having a structure in which the first housing 201 is disposed to be slidable with respect to the second housing 202. According to an embodiment, the second housing 202 may be disposed to perform reciprocating motion by a predetermined distance in a predetermined direction with respect to the first housing 201, for example, a direction indicated by an arrow ①.

According to various embodiments, the second housing 202 may be referred to as a slide portion or a slide housing, and may be movable relative to the first housing 201. According to an embodiment, the second housing 202 may receive various electrical and electronic components, such as a circuit board or a battery.

According to an embodiment, the second housing 202 may have, disposed therein, a motor, a speaker, a sim socket, and/or a sub circuit board electrically connected with a main circuit board. The second housing 201 may receive a main circuit board on which electric components, such as an application processor (AP) and a communication processor (CP) are mounted.

According to various embodiments, the first housing 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

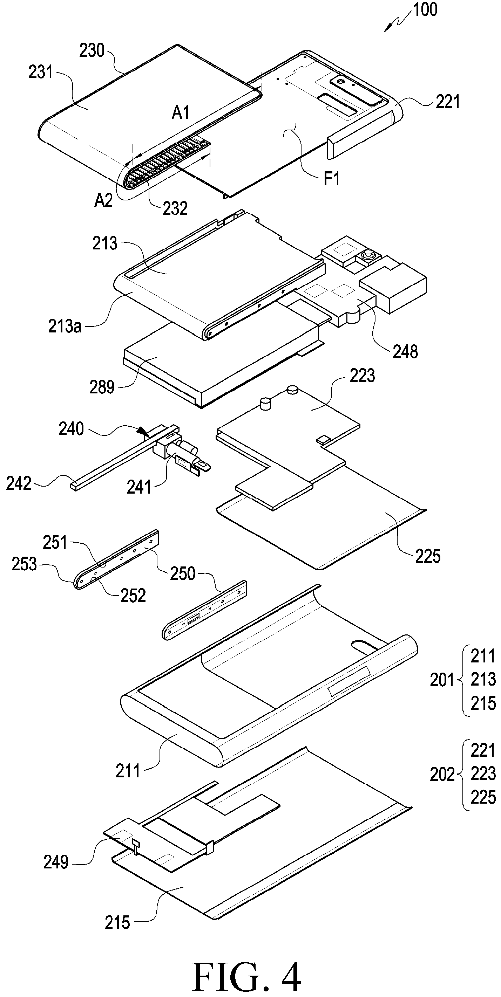

According to various embodiments, the 1-1th sidewall 211a, 1-2th sidewall 211b, and 1-3th sidewall 211c of the first cover member 211 may be formed to have a side opening (e.g., in the front surface) to receive at least a portion of the second housing 202. For example, at least a portion of the second housing 202 may be surrounded by the first housing 201 and be slid in the direction parallel to the first surface (e.g., the first surface F1 of FIG. 4), e.g., arrow ① direction, while being guided by the first housing 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to various embodiments, the first cover member 211 may be formed to surround at least a portion of the display 203. For example, at least a portion of the display 203 may be formed to be surrounded by the 1-1th sidewall 211a, the 1-2th sidewall 211b, and/or the 1-3th sidewall 211c of the first cover member 211.

According to various embodiments, the second housing 202 may include a second cover member 221 (e.g., a slide plate). The second cover member 221 may have a plate shape and include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to various embodiments, as the second housing 202 moves in a first direction (e.g., direction ①) parallel to the 1-2th sidewall 211b or the 1-2th sidewall 211c, the housing 210 may form an opened state and a closed state. In the closed state, the second housing 202 may be positioned at a first distance from the 1-1th sidewall 211a of the first housing 201. In the open state, the second housing 202 may move to be positioned at a second distance larger than the first distance from the 1-1th sidewall 211a of the first housing 201. In some embodiments, in the closed state, the first housing 201 may be formed to surround a portion of the 2-1th side wall 221a.

According to various embodiments, the electronic device 101 may include a display 203, a key input device 245, a connector hole 243, audio modules 247a and 247b, or camera modules 249a and 249b. According to an embodiment, the electronic device 101 may further include an indicator (e.g., a light emitting diode (LED) device) or various sensor modules.

According to various embodiments, the display 203 may include a first display area A1 and a second display area A2 configured to be exposed to the outside of the electronic device 101 based on the slide of the second housing 202. According to an embodiment, the first display area A1 may be disposed on the second housing 202. For example, the first display area A1 may be disposed on the second cover member 221 of the second housing 202. According to an embodiment, the second display area A2 may extend from the first display area A1, and as the second housing 202 slides relative to the first housing 201, the second display area A2 may be received in the first housing 201 (e.g., the slide-in state) or be visually exposed to the outside of the electronic device 101 (e.g., the slide-out state).

According to various embodiments, the second display area A2 may be moved while being substantially guided by one area (e.g., the curved surface 213a of FIG. 4) of the first housing 201 and be received in the space positioned in the first housing 201 or exposed to the outside of the electronic device 101. According to an embodiment, the second display area A2 may move based on a slide of the second housing 202 in the first direction (e.g., the direction indicated by the arrow ①). For example, while the second housing 202 slides, a portion of the second display area A2 may be deformed into a curved shape in a position corresponding to the curved surface 213a of the first housing 201.

According to various embodiments, when viewed from above the second cover member 221 (e.g., front cover), if the electronic device 210 changes from the closed state to opened state (e.g., if the second housing 202 slides to extend from the first housing 201), the second display area A2 may be gradually exposed to the outside of the first housing 201 and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the closed state or opened state of the housing 210, the exposed portion of the second display area A2 may be positioned on a portion (e.g., the curved surface 213a of FIG. 4) of the first housing, and a portion of the second display area A2 may remain in the curved shape in the position corresponding to the curved surface 213a.

According to various embodiments, the key input device 245 may be positioned in one area of the first housing 201. Depending on the appearance and the state of use, the electronic device 101 may be designed to omit the illustrated key input device 245 or to include additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing 201.

According to various embodiments, the connector hole 243 may be omitted or may receive a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing 202, but is not limited thereto. For example, the connector hole 243 or a connector hole not shown may be disposed in the first housing 201.

According to various embodiments, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker).

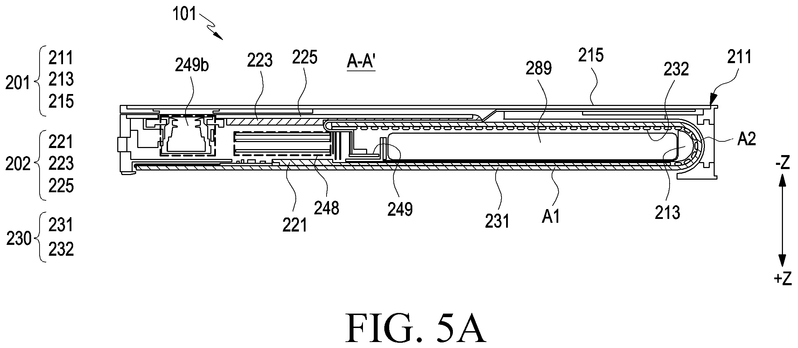

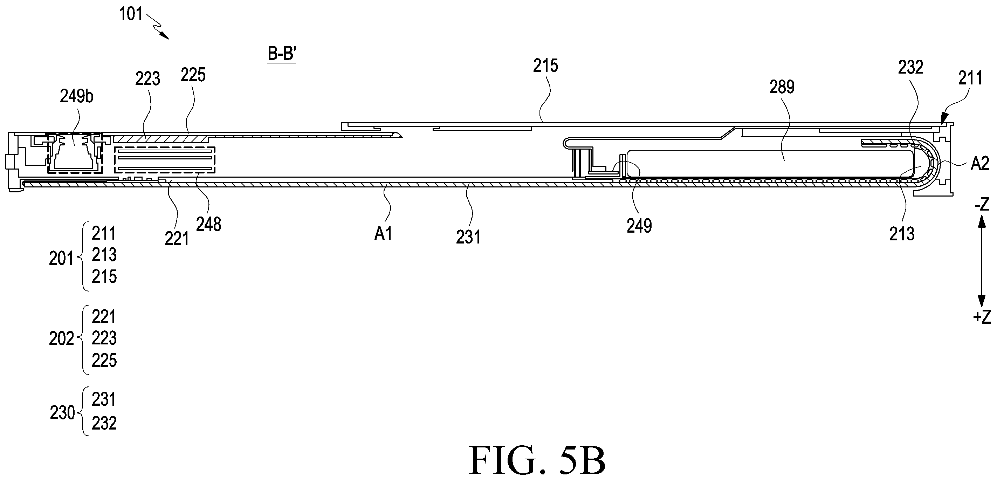

According to various embodiments, the camera modules 249a and 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 249a and 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction opposite to the first display area A1. According to an embodiment, the first camera module 249a and/or the second camera module 249b may be disposed on the second housing 202.

According to various embodiments, an indicator (not shown) of the electronic device 101 may be disposed on the first housing 201 or the second housing 202, and the indicator may include a light emitting diode to provide state information about the electronic device 101 as a visual signal. The sensor module (not shown) of the electronic device 101 may produce an electrical signal or data value corresponding to the internal operation state or external environment state of the electronic device. The sensor module may include, for example, a proximity sensor, a fingerprint sensor, or a biometric sensor (e.g., an iris/face recognition sensor or a heartrate monitor (HRM) sensor). According to another embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

FIG. 4 is an exploded perspective view illustrating an electronic device according to various embodiments of the disclosure.

FIG. 5A is a cross-sectional view taken along line A-A' of FIG. 2 according to various embodiments of the disclosure.

FIG. 5B is a cross-sectional view taken along line B-B' of FIG. 3 according to various embodiments of the disclosure.

Referring to FIGS. 4, 5A, and/or 5B, an electronic device 101 may include a first housing 201, a second housing 202, a display assembly 230, and a driving structure 240. The configuration of the first housing 201, the second housing 202, and the display assembly 230 of FIGS. 4, 5A, and/or 5B may be identical in whole or part to the configuration of the first housing 201, the second housing 202, and the display 203 of FIGS. 2 and/or 3.

According to various embodiments, the first housing 201 may include a first cover member 211 (e.g., the first cover member 211 of FIGS. 2 and 3), a frame 213, and a first rear plate 215.

According to various embodiments, the first cover member 211 may receive at least a portion of the frame 213 and receive a component (e.g., battery 289) positioned in the frame 213. According to an embodiment, the first cover member 211 may be formed to surround at least a portion of the second housing 202. According to an embodiment, the sub circuit board 249 receiving the electronic component (e.g., the processor 120 and/or the memory 130 of FIG. 1) may be connected to the first cover member 211.

According to various embodiments, the frame 213 may be connected to the first cover member 211. For example, the frame 213 may be connected to the first cover member 211. The second housing 202 is movable relative to the first cover member 211 and/or the frame 213. According to an embodiment, the frame 213 may receive the battery 289. According to an embodiment, the frame 213 may include a curved portion 213a facing the display assembly 230.

According to various embodiments, the first rear plate 215 may substantially form at least a portion of the exterior of the first housing 201 or the electronic device 101. For example, the first rear plate 215 may be coupled to the outer surface of the first cover member 221. According to an embodiment, the first rear plate 215 may provide a decorative effect on the exterior of the electronic device 101. The first rear plate 215 may be formed of at least one of metal, glass, synthetic resin, or ceramic.

According to various embodiments, the second housing 202 may include a second cover member 221 (e.g., the second cover member 221 of FIGS. 2 and 3), a rear cover 223, and a second rear plate 225.

According to an embodiment, the second cover member 221 may be connected to the first housing 201 through the guide rail 250 and, while being guided by the guide rail 250, reciprocate linearly in one direction (e.g., the direction of arrow ① in FIG. 3).

According to various embodiments, the second cover member 221 may support at least a portion of the display 203. For example, the second cover member 221 may include a first surface F1. The first display area A1 of the display 203 may be substantially positioned on the first surface F1 to maintain a flat panel shape. According to an embodiment, the second cover member 221 may be formed of a metal material and/or a non-metal (e.g., polymer) material. According to an embodiment, the main circuit board 248 receiving the electronic component (e.g., the processor 120 and/or the memory 130 of FIG. 1) may be connected to the second cover member 221.

According to various embodiments, the rear cover 223 may protect a component (e.g., the main circuit board 248) positioned on the second cover member 221. For example, the rear cover 223 may be connected to the second cover member 221 and may be formed to surround at least a portion of the main circuit board 248. According to an embodiment, the rear cover 223 may include an antenna pattern for communicating with an external electronic device. For example, the rear cover 223 may include a laser direct structuring (LDS) antenna.

According to various embodiments, the second rear plate 225 may substantially form at least a portion of the exterior of the second housing 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 215 may be formed of at least one of metal, glass, synthetic resin, or ceramic.

According to various embodiments, the display assembly 230 may include a display 231 (e.g., the display 203 of FIGS. 2 and/or 3) and a multi-bar structure 232 supporting the display 203. According to an embodiment, the display 231 may be referred to as a flexible display, a foldable display, and/or a rollable display.

According to various embodiments, the multi-bar structure 232 may be connected to or attached to at least a portion (e.g., the second display area A2) of the display 231. According to an embodiment, as the second housing 202 slides, the multi-bar structure 232 may move with respect to the first housing 201. In the closed state of the electronic device 101 (e.g., FIG. 2), the multi-bar structure 232 may be mostly received in the first housing 201 and may be positioned between the first cover member 211 and the second cover member 221. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure and may be in the form of one elastic plate.

According to various embodiments, the driving structure 240 may move the second housing 202 relative to the first housing 201. For example, the drive structure 240 may include a motor 241 configured to generate a driving force for sliding the housing 201 and 202. The driving structure 240 may include a gear (e.g., a pinion) connected to the motor 241 and a rack 242 configured to mesh with the gear.

According to various embodiments, the housing in which the rack 242 is positioned and the housing in which the motor 241 is positioned may be different. According to an embodiment, the motor 241 may be connected to the second housing 202. The rack 242 may be connected to the first housing 201. According to another embodiment, the motor 241 may be connected to the first housing 201. The rack 242 may be connected to the second housing 202.

According to various embodiments, the second housing 202 may receive the main circuit board 248. According to an embodiment, the processor, the memory, and/or the interface may be mounted on the main circuit board 248. The processor may include one or more of, e.g., a central processing unit, an application processor, a graphic processing device, an image signal processing, a sensor hub processor, or a communication processor. According to various embodiments, the main circuit board 248 may include a flexible printed circuit board type radio frequency cable (FRC). The main circuit board 248 may be disposed on at least a portion of the second cover member 221 and may be electrically connected to the antenna module and the communication module.

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to various embodiments, the electronic device 101 may include a sub circuit board 249 spaced apart from the main circuit board 248 in the first housing 201. The sub circuit board 249 may be electrically connected with the main circuit board 248 through a circuit board (e.g., a flexible circuit board). The sub circuit board 249 may be electrically connected with electrical components disposed in an end area of the electronic device, such as the battery 289 or a speaker and/or a sim socket, and may transfer signals and power. According to an embodiment, the sub circuit board 249 may receive a wireless charging antenna (e.g., a coil) or be connected to the wireless charging antenna. For example, the battery 289 may receive power from an external electronic device through the wireless charging antenna. As another example, the battery 289 may transfer power to the external electronic device by the wireless charging antenna.

According to various embodiments, the battery 289 may be a device for supplying power to at least one component of the electronic device 101. The battery 189 may include a primary cell which is not rechargeable, a secondary cell which is rechargeable, or a fuel cell. The battery 289 may be integrally or detachably disposed inside the electronic device 101. According to an embodiment, the battery 289 may be formed of a single embedded battery or may include a plurality of removable batteries. According to various embodiments, the battery 289 may be position on the frame 213. According to another embodiment, the battery 289 may be positioned within the second housing 202 and may be slid along with the second housing 202.

According to various embodiments, the guide rail 250 may guide the movement of the multi-bar structure 232. For example, the multi-bar structure 232 may slide along the slit 251 formed in the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed in the inner surface of the guide rail 250.

According to various embodiments, the guide rail 250 may provide pressure to the multi-bar structure 233 based on the driving of the motor 241.

According to an embodiment, when the electronic device 101 changes from the closed state to opened state, the inner portion 252 of the guide rail 250 may provide pressure to the multi-bar structure 232. The multi-bar structure 232 receiving the pressure may be moved along the slit 251 of the guide rail 250, and the second housing 202 may be changed from the slide-in state to slide-out state with respect to the first housing 201. At least a portion of the display assembly 230 accommodated between the first cover member 211 and the frame 213 may be extended to the front surface.

According to an embodiment, when the electronic device 101 changes from the opened state to closed state, an outer portion 253 of the guide rail 250 may provide pressure to the bent multi-bar structure 232. The multi-bar structure 232 receiving the pressure may be moved along the slit 251 of the guide rail 250, and the second housing 202 may be changed from the slide-out state to slide-in state with respect to the first housing 201. At least a portion of the display assembly 230 may be accommodated between the first cover member 211 and the frame 213.

Referring to FIG. 5A, in the closed state of the electronic device 101, at least a portion of the second housing 202 may be disposed to be received in the first housing 201. As the second housing 202 is disposed to be received in the first housing 201, the overall volume of the electronic device 101 may be reduced. According to an embodiment, when the second housing 202 is received in the first housing 201, the size of the visually exposed display 231 may be minimized. For example, if the second housing 202 is completely received in the first housing 201, the first display area A1 of the display 231 may be visually exposed, and the second display area A2 may not be visually exposed. At least a portion (e.g., a portion facing in the -Z axis) of the second display area A2 may be disposed between the battery 289 and the first rear plate 215.

Referring to FIG. 5B, in the opened state of the electronic device 101, at least a portion of the second housing 202 may protrude from the first housing 201. As the second housing 202 is disposed to protrude from the first housing 201, the overall volume of the electronic device 101 may be increased. According to an embodiment, if the second housing 202 protrudes from the first housing 201, at least a portion of the second display area A2 of the display 231, together with the first display area A1, may be visually exposed to the outside of the electronic device 101.

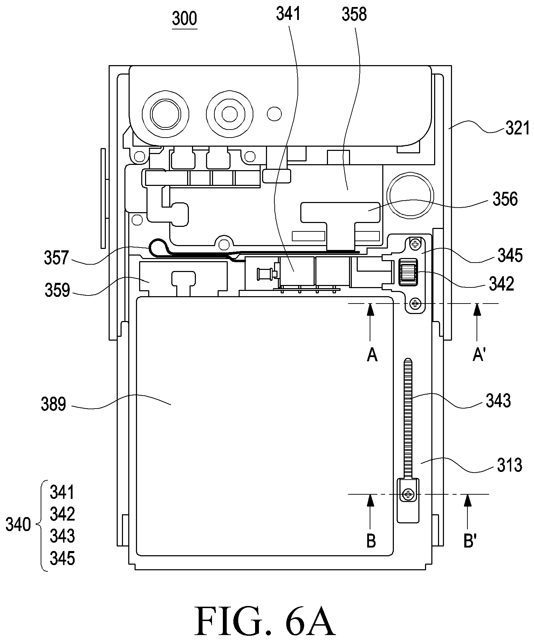

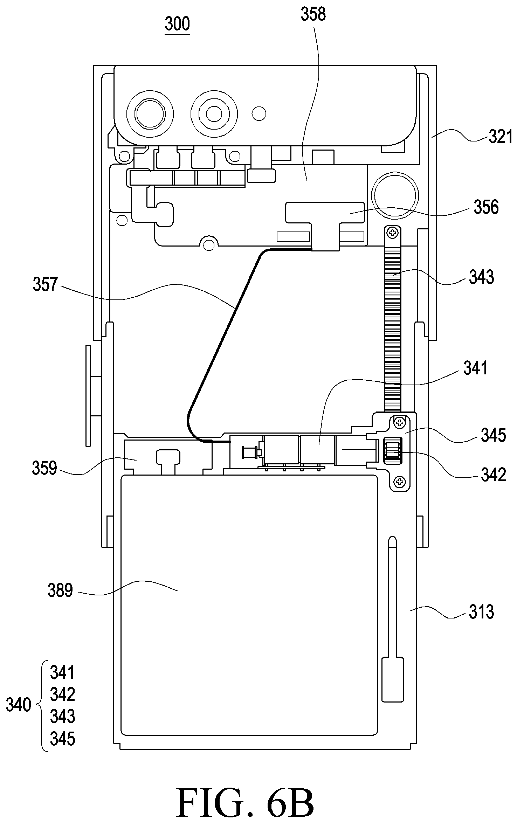

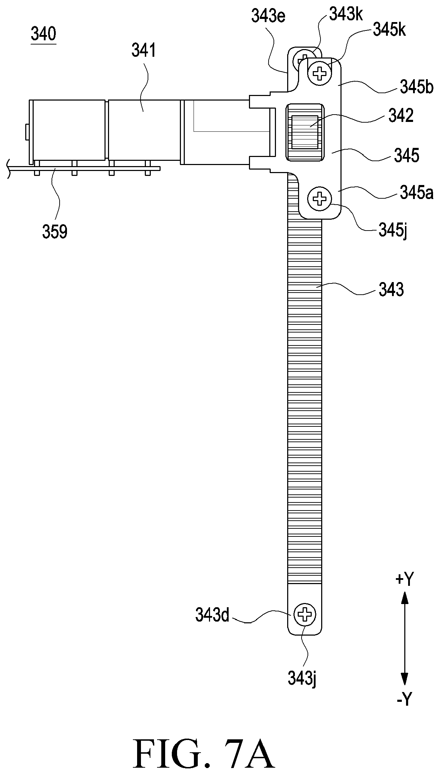

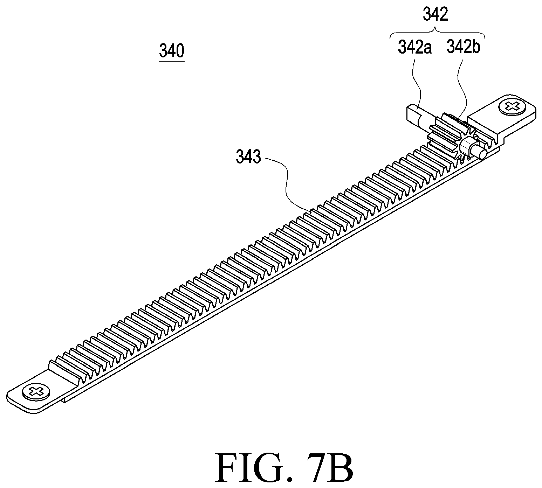

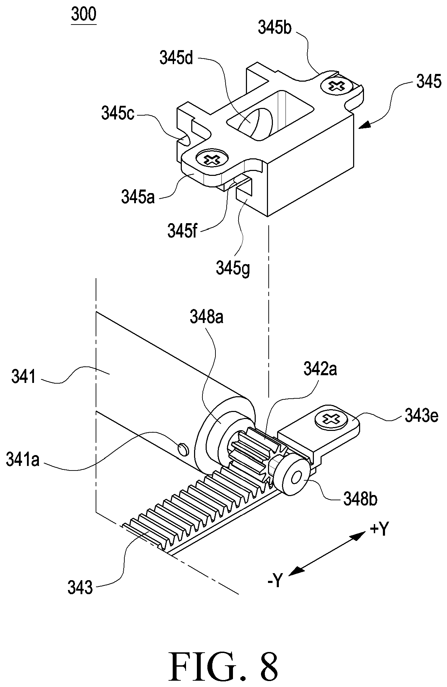

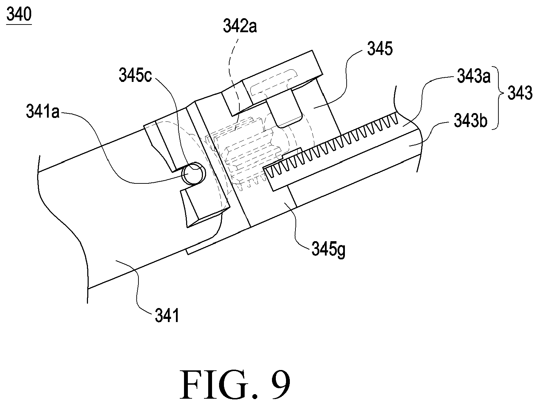

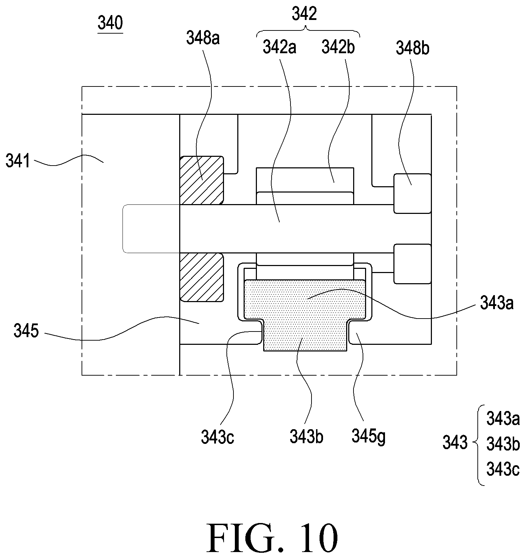

FIG. 6A is a view illustrating a closed state of an electronic device according to various embodiments of the disclosure. FIG. 6B is a view illustrating an opened state of an electronic device according to various embodiments of the disclosure. FIG. 7A is a plan view illustrating a driving structure according to various embodiments of the disclosure. FIG. 7B is a perspective view illustrating a rack gear and a pinion gear according to various embodiments of the disclosure. FIG. 8 is a perspective view illustrating a driving structure in a state in which a gear bracket is separated according to various embodiments of the disclosure. FIG. 9 is a perspective view illustrating a driving structure in a state in which a gear bracket is coupled according to various embodiments of the disclosure. FIG. 10 is a cross-sectional view illustrating a partial area of a driving structure according to various embodiments of the disclosure.

Referring to FIGS. 6A to 10, an electronic device 300 (e.g., the electronic device 101 of FIGS. 1 to 5B) may include a first housing (e.g., the frame 313), a second housing (e.g., the second cover member 321), a battery 389, a main circuit board 358, a sub circuit board 359, and/or a driving structure 340.

The configuration of the first housing (e.g., the frame 313), the second housing (e.g., the second cover member 321), the battery 389, the main circuit board 358, the sub circuit board 359, and/or the driving structure 340 of FIGS. 6A to 9 may be identical in whole or part to the configuration of the first housing 201 (or the frame 213), the second housing 202 (or the second cover member 221), the battery 289, the main circuit board 248, the sub circuit board 249, and/or the driving structure 240 of FIGS. 4, 5A, and/or 5B.

According to various embodiments, the first housing (e.g., the first housing 201 of FIGS. 4 to 5B) may include a frame 313 (e.g., the frame 213 of FIGS. 4 to 5B). According to an embodiment, the frame 313 may be coupled or connected so that the second cover member 321 (e.g., the second cover member 221 of FIGS. 4 to 5B) is slidable relative to the frame 313.

According to various embodiments, the motor 341, the sub circuit board 359, and the gear bracket 345 may be fixed to the frame 313. According to an embodiment, the rack 343 may be fixed to the frame 313.

According to various embodiments, the second housing (e.g., the second housing 202 of FIGS. 4 to 5B) may include a second cover member 321 (e.g., the second cover member 221 of FIGS. 4 to 5B). According to an embodiment, the second cover member 321 may slide relative to the first housing (or the frame 313) through a driving force provided from the driving structure 340. For example, the second cover member 321 may be disposed in a slide-in state with respect to the frame 313 as illustrated in FIG. 6A (or FIG. 5A), or may be disposed in a slide-out state with respect to the frame 313 as illustrated in FIG. 6B (or FIG. 5B).

According to various embodiments, the main circuit board 358 and the rack 343 may be fixed to the second cover member 321. According to an embodiment, the motor 341 and the gear bracket 345 may be fixed to the second cover member 321.

According to various embodiments, the electronic device 300 may include a main circuit board 358 (e.g., the main circuit board 248 of FIGS. 4 to 5B) disposed or fixed to the second cover member 321 and a sub circuit board 359 (e.g., the sub circuit board 249 of FIGS. 4 to 5B) disposed or fixed to the frame 313. According to another embodiment, the main circuit board 358 may be disposed or fixed to the first housing (e.g., the first housing 201 of FIGS. 4 to 5B) or the frame 313, and the sub circuit board 359 may be disposed or fixed to the second housing (e.g., the second housing 202 of FIGS. 4 to 5B) or the second cover member 321. According to an embodiment, at least a portion of the sub circuit board 359 may be connected to the motor 341, providing power or a signal to the motor 341.

According to an embodiment, the electronic device 300 may further include a connection circuit board 357 electrically connecting the main circuit board 358 and the sub circuit board 359. In an embodiment, the connection circuit board 357 may include any one of a flexible PCB (FPCB) or a rigid flexible PCB (R-FPCB).

According to an embodiment, the electronic device 300 may further include a connector 356 that electrically connects a portion of the connection circuit board 357 and the main circuit board 358. In an embodiment, the connector 356 may be a board-to-board connector.

According to various embodiments, the driving structure 340 (e.g., the driving structure 240 of FIGS. 4 to 5B) may be disposed in a housing (e.g., the housing 210 of FIGS. 4 to 5B) and may provide a driving force for a sliding movement of the second housing (e.g., the second housing 202 of FIGS. 4 to 5B). According to an embodiment, the driving structure 340 may include a motor 341 (e.g., the motor 241 of FIGS. 4 to 5B), a pinion gear 342, a rack 343 (e.g., the rack 242 of FIGS. 4 to 5B), and/or a gear bracket 345.

According to an embodiment, the motor 341 may be disposed on the frame 313. For example, at least a portion of the motor 341 may be coupled to the frame 313.

According to an embodiment, the pinion gear 342 may be connected to the motor 341 and may be rotated in one direction or in another direction opposite to the one direction through a driving force provided from the motor 341.

According to an embodiment, the pinion gear 342 may be disposed inside the gear bracket 345, and the gear bracket 345 may rotatably support the pinion gear 342.

According to an embodiment, the pinion gear 342 may include a pin-shaped 1-1th portion 342a, at least a portion of which is inserted into and fixed to the motor 341, and a serrated 1-2th portion 342b protruding from at least a portion of the 1-1th portion 342. The 1-2th portion 342b of the pinion gear 342 may be connected to be engaged with the rack 343. For example, the 1-2th portion 342b of the pinion gear 342 may be engaged with the serrated portion formed in the 2-1th portion 343a of the rack 343.

According to an embodiment, the rack 343 may be disposed on the second cover member 321. For example, at least a portion of the rack 343 may be coupled to the second cover member 321. According to an embodiment, the rack 343 may be connected to be engaged with the pinion gear 342. According to an embodiment, at least a portion of the rack 343 may be disposed inside the gear bracket 345.

According to an embodiment, the rack 343 may include a 2-1th portion 343a having a serrated portion to be engaged with the 1-2th portion 342b of the pinion gear 342, and a 2-2th portion 343b connected to the 2-1th portion 343a and having a width smaller than the width (e.g., the width in the left/right direction of FIG. 10) of the 2-1th portion 343a. In an embodiment, the 2-1th portion 343a and the 2-2th portion 343b may be integrally formed. In another embodiment, the 2-1th portion 343a and the 2-2th portion 343b may be separately formed and assembled. According to an embodiment, the 2-2th portion 343b may be defined and interpreted as a portion protruding from at least a portion of the 2-1th portion 343a.

According to an embodiment, the rack 343 may include a guide groove 343c. According to an embodiment, the guide groove 343c may be supported by a guide groove support portion 345g of the gear bracket 345. According to an embodiment, the guide groove 343c may be a stepped portion formed by a width difference between the 2-1th portion 343a and the 2-2th portion 343b. In an embodiment, the guide groove 343c may be defined and interpreted as a space formed by cutting a corner of the rack 343. According to an embodiment, at least a portion of the guide groove 343c may have a position overlapping the serrated portion formed in the 2-1th portion 343a (e.g., a position overlapping in the vertical direction of FIG. 10). For example, the rack 343 may be supported by the guide groove support portion 345g of the gear bracket 345 through the guide groove 343c formed in the rack 343, and accordingly, the size (or width) of the rack 343 may be decreased while the rack 343 includes a slide supporting structure. For example, by decreasing the size (or width) of the rack 343, it is possible to secure a sufficient space (e.g., a battery mounting space) for the battery 389 inside the electronic device.

According to an embodiment, the gear bracket 345 may be disposed on the frame 313 and may guide the sliding movement of the rack 343. For example, at least a portion of the gear bracket 345 may be coupled to the frame 313, and another portion of the gear bracket 345 may be coupled to the motor 341. In an embodiment, the gear bracket 345 may be welded to at least a portion of the motor 341.

According to an embodiment, the gear bracket 345 may include a 1-1th coupling portion 345a and a 1-2th coupling portion 345b protruding or extending from the gear bracket 345. For example, the 1-1th coupling portion 345a and the 1-2th coupling portion 345b may extend in opposite directions. In an embodiment, the 1-1th coupling portion 345a and the 1-2th coupling portion 345b may be coupled to the frame 313 through bolts or screws 345j and 345k, respectively. According to an embodiment, a virtual first straight line connecting the 1-1th coupling portion 345a and the 1-2th coupling portion 345b may be parallel to the sliding direction of the second housing (e.g., the second cover member 321).

According to an embodiment, the rack gear 343 may include a 2-1th coupling portion 343d and a 2-2th coupling portion 343e coupled to the second cover member 321. According to an embodiment, the 2-1th coupling portion 343d and the 2-2th coupling portion 343e may be disposed to face in opposite directions. According to an embodiment, the 2-1th coupling portion 343d and the 2-2th coupling portion 343e may be coupled to the second cover member 321 through bolts or screws 343j and 343k, respectively. According to an embodiment, a virtual second straight line connecting the 2-1th coupling portion 343d and the 2-2th coupling portion 343e may be parallel to the virtual first straight line.

Referring to FIG. 7A, the pair of bolts or screws 343j and 343k for coupling the gear bracket 345 to the frame 313 may be spaced apart from each other in a first direction which is the length direction (e.g., the Y-axis direction of FIG. 7A) of the electronic device 300, and the pair of bolts or screws 345j and 345k for coupling the rack 343 to the second cover member 321 may also be spaced apart from each other in the first direction which is the length direction of the electronic device 300. For example, the virtual first straight line connecting the pair of bolts or screws (e.g., 345j and 345k) of the gear bracket 345 may be substantially parallel to the virtual second straight line connecting the pair of bolts or screws (e.g., 343j and 343k) of the rack 343.

According to various embodiments, the gear bracket 345 may further include a fixing recess 345c recessed from at least a portion of the gear bracket 345. According to an embodiment, a fixing protrusion 341a protruding from at least a portion of the outer surface of the housing of the motor 341 may be inserted into the fixing recess 345c.

According to various embodiments, the gear bracket 345 may include an opening 345f formed through at least a portion thereof, and the opening 345f may provide a space in which the rack gear 343 may slide.

According to an embodiment, the second cover member 321 may slide relative to the frame 313 through the driving force provided from the motor 341 and/or the driving structure 340.

According to an embodiment, when the pinion gear 342 connected to the motor 341 is rotated in one direction, the rack 343 engaged with the pinion gear 342 may slide in the first direction (e.g., the +Y direction of FIG. 8), and the second cover member 321 connected to the rack 343 may slide in the first direction with respect to the frame 313.

According to an embodiment, when the pinion gear 342 connected to the motor 341 is rotated in the other direction opposite to the one direction, the rack 343 engaged with the pinion gear 342 may slide in a second direction (e.g., the -Y direction of FIG. 8) opposite to the first direction, and the second cover member 321 connected to the rack 343 may slide in the second direction with respect to the frame 313.

According to an embodiment, the motor 341 and/or the gear bracket 345 may be coupled to the second cover member 321, and the rack 343 may be coupled to the frame 313.

Referring to FIG. 10, the gear bracket 345 may further include a guide groove support portion 345g slidably supporting the rack 343. According to an embodiment, the guide groove support portion 345g may protrude from at least a portion of the inside of the gear bracket 345 and may be disposed in the guide groove 343c of the rack 343. According to an embodiment, the guide groove support portion 345g may be formed or disposed adjacent to the opening 345f formed in the side surface of the gear bracket 345.

According to an embodiment, in the rack 343, the guide groove 343c may be seated on the guide groove support portion 345g of the gear bracket 345. According to an embodiment, the guide groove 343c of the rack 343 may be supported by the guide groove support portion 345g of the gear bracket 345. According to an embodiment, the guide groove support portion 345g may support the guide groove 343c so that the rack 343 is slidable.

According to various embodiments, the driving structure 340 may include at least one bearing 348a and 348b. According to an embodiment, the at least one bearing 348a and 348b may include a first bearing 348a supporting one end of the 1-1th portion 342a of the pinion gear 342 and a second bearing 348b supporting the other end of the 1-1th portion 342a of the pinion gear 342. According to an embodiment, the first bearing 348a and the second bearing 348b may rotatably support the pinion gear 342 disposed inside the gear bracket 345.

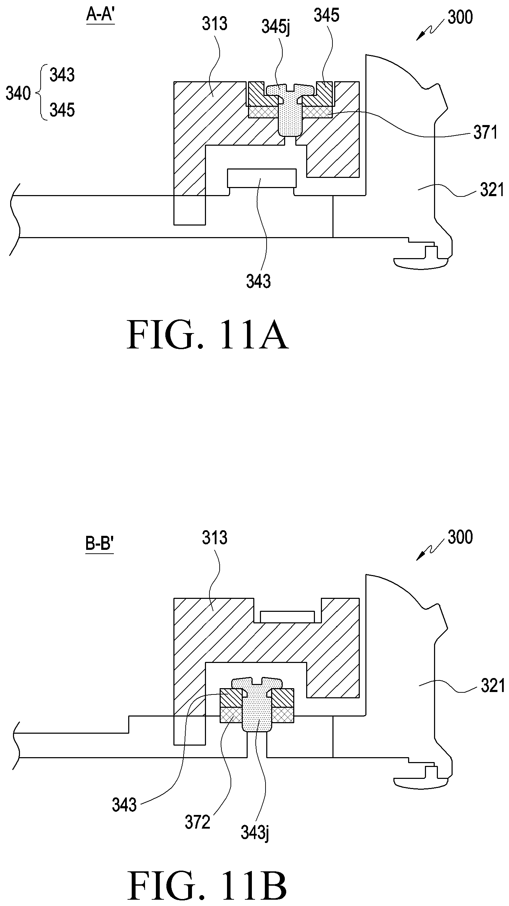

FIG. 11A is a cross-sectional view taken along line A-A' of FIG. 6A according to various embodiments of the disclosure. FIG. 11B is a cross-sectional view taken along line B-B' of FIG. 6A according to various embodiments of the disclosure.

Referring to FIGS. 11A and 11B, an electronic device (e.g., the electronic device 101 of FIGS. 1 to 5B or the electronic device 300 of FIGS. 6A to 6B) may include a frame 313, a second cover member 321, a driving structure 340, a first buffer member 371, and/or a second buffer member 372.

The configuration of the frame 313, the second cover member 321, and/or the driving structure 340 of FIGS. 11A to 11B may be identical in whole or part to the configuration of the frame 313, the second cover member 321, and/or the driving structure 340 of FIGS. 6A to 10.

According to various embodiments, the driving structure 340 may include a rack 343 (e.g., the rack 343 of FIGS. 6A to 10).

Referring to FIG. 11A, at least a portion (e.g., the 1-1 coupling portion 345a of FIG. 8) of the gear bracket 345 may be coupled to at least a portion of the frame 313 through a fastening member 345j (e.g., the bolt or screw 345j of FIG. 7A).

According to an embodiment, the electronic device may include the first buffer member 371 disposed between the at least the portion of the gear bracket 345 and the at least the portion of the frame 313. The first buffer member 371 may absorb vibration generated by the motor when the motor (e.g., the motor 341 of FIGS. 6A to 6B) operates, thereby blocking vibration transferred from the motor to the frame 313 through the gear bracket 345. By blocking the vibration, noise may be prevented from being generated between the frame 313 and the gear bracket 345.

According to an embodiment, the first buffer member 371 may be formed of a rubber washer.

Referring to FIG. 11B, at least a portion of the rack 343 may be coupled to at least a portion of the second cover member 321 through a fastening member 343j (e.g., the bolt or screw 343j of FIG. 7A).

According to an embodiment, the electronic device may include the second buffer member 372 disposed between the at least the portion of the rack 343 and the at least the portion of the second cover member 321. The second buffer member 372 may absorb vibration generated by the motor when the motor (e.g., the motor 341 of FIGS. 6A to 6B) operates, thereby blocking vibration transferred to the second cover member 321 through the rack 343. By blocking the vibration, noise may be prevented from being generated between the rack 343 and the second cover member 321.

According to an embodiment, the second buffer member 372 may be formed of a rubber washer.

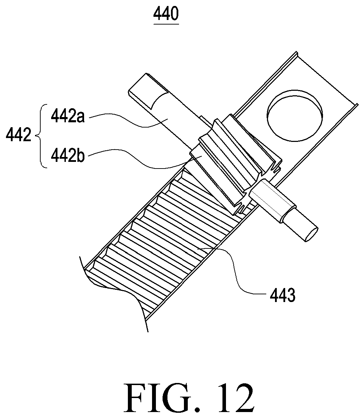

FIG. 12 is a view illustrating a rack and a pinion gear according to various embodiments of the disclosure.

Referring to FIG. 12, a driving structure 440 may include a pinion gear 442 and a rack 443.

The configuration of the driving structure 440, the pinion gear 442, and the rack 443 of FIG. 12 may be identical in whole or part to the configuration of the driving structure 340, the pinion gear 342, and the rack 343 of FIGS. 6A to 10.

According to an embodiment, the pinion gear 442 may include a 1-1th portion 442a (e.g., the 1-1th portion 342a of FIG. 7B) and a 1-2th portion 442b (e.g., the 1-2th portion 342b of FIG. 7B).

According to an embodiment, the serrated portion formed in the 1-2th portion 442b may be configured as a helical gear. According to an embodiment, the serrated portion of the rack 443 configured to be engaged with the 1-2th portion 442b formed of the helical gear may also be formed of a helical gear.

According to an embodiment, when the pinion gear 442 and the rack 443 are configured as helical gears, noise may be reduced by about 2 dB to about 3 dB compared to when the pinion gear and the rack gear are configured as flat gears.

According to various embodiments of the disclosure, an electronic device (e.g., the electronic device 101 of FIGS. 1 to 5B or the electronic device 300 of FIGS. 6A and 6B) may comprise a first housing (e.g., the first housing 201 of FIGS. 4 to 5B), a second housing (e.g., the second housing 202 or the second cover member 221 of FIGS. 4 to 5B or the second cover member 221 of FIGS. 6A and 6B) configured to slide relative to the first housing, a rollable display (e.g., the display 231 of FIGS. 4 to 5B) including a first display area (e.g., the first display area A1 of FIGS. 4 to 5B) and a second display area (e.g., the second display area A2 of FIGS. 4 to 5B) extending from the first display area, wherein at least a portion of the second display area is configured to be moved based on a sliding movement of the second housing, and a driving structure (e.g., the driving structure 240 of FIGS. 4 to 5B or the driving structure 340 of FIGS. 6A to 10) configured to provide a driving force for sliding of the second housing with respect to the first housing. The driving structure may include a motor (e.g., the motor 341 of FIGS. 6A to 10) disposed in the first housing, a pinion gear (e.g., the pinion gear 342 of FIGS. 6A to 10) connected to the motor and configured to rotate in one direction or in another direction opposite to the one direction based on a driving force of the motor, a rack (e.g., the rack 343 of FIGS. 6A to 10) disposed in the second housing, configured to be engaged with the pinion gear, and including a guide groove (e.g., the guide groove 343c of FIGS. 6A to 10), and a gear bracket (e.g., the gear bracket 345 of FIGS. 6A to 10) including a guide groove support portion (e.g., the guide groove support portion 345g of FIGS. 6A to 10) configured to support the guide groove of the rack and coupled to one side of the motor.

According to various embodiments, the gear bracket may include a 1-1th coupling portion (e.g., the first coupling portion 345a of FIGS. 6A to 10) and a 1-2th coupling portion (e.g., the second coupling portion 345b of FIGS. 6A to 10) coupled to the first housing. A virtual first straight line connecting the 1-1th coupling portion and the 1-2th coupling portion may be parallel to a sliding direction of the second housing.

According to various embodiments, the rack may include a 2-1th coupling portion (e.g., the 2-1th coupling portion 343d of FIGS. 6A to 10) and a 2-2th coupling portion (e.g., the 2-2th coupling portion 343e of FIGS. 6A to 10) coupled to the second housing. A virtual second straight line connecting the 2-1th coupling portion and the 2-2th coupling portion may be parallel to the virtual first straight line.

According to various embodiments, the electronic device may further comprise a first buffer member (e.g., the first buffer member 371 of FIG. 11A) disposed between the first housing and the gear bracket.

According to various embodiments, the first buffer member may include a rubber washer.

According to various embodiments, the electronic device may further comprise a second buffer member (e.g., the second buffer member 372 of FIG. 11B) disposed between the second housing and the rack.

According to various embodiments, the pinion gear may include a 1-1th portion (e.g., the 1-1th portion 342a of FIGS. 6A to 10), at least a portion of which is inserted into and fixed to the motor, and a 1-2th portion (e.g., the 1-2th portion 342b of FIGS. 6A to 10) protruding from at least a portion of the 1-1th portion and configured to be engaged with the rack. The 1-1th portion may be rotatably connected to the gear bracket.

According to various embodiments, the driving structure may further include a bearing (e.g., the bearings 348a and 348b of FIGS. 6A to 10) disposed on the gear bracket and rotatably supporting the 1-1th portion.

According to various embodiments, the rack may include a 2-1th portion (e.g., the 2-1th portion 343a of FIGS. 6A to 10) configured to be engaged with the pinion gear, and a 2-2th portion (e.g., the 2-2th portion 343b of FIGS. 6A to 10) connected to the 2-1th portion and having a width smaller than a width of the 2-1th portion. The 2-1th portion and the 2-2th portion may be integrally formed. The guide groove may be a stepped portion formed by a width difference between the 2-1th portion and the 2-2th portion.

According to various embodiments, the guide groove support portion may be configured to protrude from at least a portion of the guide bracket to support the guide groove.

According to various embodiments, at least a portion of the motor and at least a portion of the gear bracket may be welded to each other.

According to various embodiments, the motor may include a fixing protrusion (e.g., the fixing protrusion 341a of FIGS. 6A to 10) protruding from at least a portion thereof. The gear bracket may include a fixing recess (e.g., the motor 345c of FIGS. 6A to 10) recessed from at least a portion thereof. The fixing protrusion may be inserted into the fixing recess.

According to various embodiments, the electronic device may further comprise a battery (e.g., the battery 289 of FIGS. 4 to 5B or the battery 389 of FIGS. 6A and 6B) disposed in the first housing and configured to provide power to the motor.

According to various embodiments, the pinion gear and the rack may include a helical gear.

According to various embodiments, the gear bracket may receive at least a portion of the pinion gear and at least a portion of the rack.

According to various embodiments of the disclosure, an electronic device (e.g., the electronic device 101 of FIGS. 1 to 5B or the electronic device 300 of FIGS. 6A and 6B) may comprise a first housing (e.g., the first housing 201 of FIGS. 4 to 5B), a second housing (e.g., the second housing 202 or the second cover member 221 of FIGS. 4 to 5B or the second cover member 221 of FIGS. 6A and 6B) configured to slide relative to the first housing, a display (e.g., the display 231 of FIGS. 4 to 5B) including a first display area (e.g., the first display area A1 of FIGS. 4 to 5B) and a second display area (e.g., the second display area A2 of FIGS. 4 to 5B) extending from the first display area, and wherein at least a portion of the second display area is configured to be moved based on a sliding movement of the second housing, and a driving structure (e.g., the driving structure 240 of FIGS. 4 to 5B or the driving structure 340 of FIGS. 6A to 10) configured to provide a driving force for sliding of the second housing with respect to the first housing. The driving structure may include a motor (e.g., the motor 341 of FIGS. 6A to 10) fixed to the first housing, a pinion gear (e.g., the pinion gear 342 of FIGS. 6A to 10) connected to the motor and configured to rotate in one direction or in another direction opposite to the one direction based on a driving force of the motor, a rack (e.g., the rack 343 of FIGS. 6A to 10) fixed to the second housing and having at least a portion configured to be engaged with the pinion gear, and a gear bracket (e.g., the gear bracket 345 of FIGS. 6A to 10) receiving at least a portion of the pinion gear and at least a portion of the rack and fixed to the motor and the first housing. The gear bracket may include a 1-1th coupling portion (e.g., the first coupling portion 345a of FIGS. 6A to 10) and a 1-2th coupling portion (e.g., the second coupling portion 345b of FIGS. 6A to 10) coupled to the first housing. A virtual first straight line connecting the 1-1th coupling portion and the 1-2th coupling portion may be parallel to a sliding direction of the second housing.

According to various embodiments, the electronic device may comprise a first buffer member (e.g., the first buffer member 371 of FIG. 11A) disposed between the first housing and the gear bracket and a second buffer member (e.g., the second buffer member 372 of FIG. 11B) disposed between the second housing and the rack.

According to various embodiments, the pinion gear and the rack may include a helical gear.

According to various embodiments, the 1-1th coupling portion and the 1-2th coupling portion may extend in opposite directions from the gear bracket.

According to various embodiments of the disclosure, an electronic device (e.g., the electronic device 101 of FIGS. 1 to 5B or the electronic device 300 of FIGS. 6A and 6B) may comprise a first housing (e.g., the first housing 201 of FIGS. 4 to 5B), a second housing (e.g., the second housing 202 or the second cover member 221 of FIGS. 4 to 5B or the second cover member 221 of FIGS. 6A and 6B) configured to slide relative to the first housing, a display (e.g., the display 231 of FIGS. 4 to 5B) including a first display area (e.g., the first display area A1 of FIGS. 4 to 5B) and a second display area (e.g., the second display area A2 of FIGS. 4 to 5B) extending from the first display area, wherein at least a portion of the second display area is configured to be moved based on a sliding movement of the second housing, and a driving structure (e.g., the driving structure 240 of FIGS. 4 to 5B or the driving structure 340 of FIGS. 6A to 10) configured to provide a driving force for sliding of the second housing with respect to the first housing. The driving structure may include a motor (e.g., the motor 341 of FIGS. 6A to 10) fixed to the first housing, a pinion gear (e.g., the pinion gear 342 of FIGS. 6A to 10) connected to the motor and configured to rotate in one direction or in another direction opposite to the one direction based on a driving force of the motor, a rack (e.g., the rack 343 of FIGS. 6A to 10) fixed to the second housing and having at least a portion configured to be engaged with the pinion gear, and a gear bracket (e.g., the gear bracket 345 of FIGS. 6A to 10) receiving at least a portion of the pinion gear and at least a portion of the rack and fixed to the motor and the first housing. At least a portion of the gear bracket may be welded to the motor.

The invention is defined by the following claims.

## Claims

1. An electronic device, comprising:
a first housing (201);
a second housing (202) configured to slide with respect to the first housing;
a rollable display (203) including a first display area (A1) and a second display area (A2) extending from the first display area, wherein at least a portion of the second display area is configured to be drawn into or out of the first housing based on a sliding movement of the second housing; and
a driving structure (340, 440) configured to provide a driving force for sliding of the second housing with respect to the first housing, wherein the driving structure includes:
a motor (341) disposed in the first housing;
a pinion gear (342, 442) connected to the motor and configured to rotate in one direction or in another direction opposite to the one direction based on a driving force of the motor;
a rack (343, 443) disposed in the second housing and comprising a rack gear at an upper portion of the rack (343, 443) and a guide groove (343c) at a lower portion of the rack (343), wherein the rack gear is configured to be engaged with the pinion gear; and
a gear bracket (345) including a guide groove support portion (345g) configured to support the guide groove (343c) of the rack (343, 443) and coupled to one side of the motor (341),
**characterised in that** the width of the upper portion of the rack (343) is defined by the rack gear and the width of the lower portion of the rack (343) is less than the width of the upper portion of the rack.

2. The electronic device of claim 1, wherein the gear bracket (345) includes a 1-1th coupling portion (345a) and a 1-2th coupling portion (345b) coupled to the first housing (201), and
wherein a virtual first straight line connecting the 1-1th coupling portion (345a) and the 1-2th coupling portion (345b) is parallel to a sliding direction of the second housing.

3. The electronic device of claim 2, wherein the rack (343, 443) includes a 2-1th coupling portion (343d) and a 2-2th coupling portion (343e) coupled to the second housing (202), and
wherein a virtual second straight line connecting the 2-1th coupling portion (343d) and the 2-2th coupling portion (343e) is parallel to the virtual first straight line.

4. The electronic device of claim 1, further comprising a first buffer member (371) disposed between the first housing (201) and the gear bracket (345).

5. The electronic device of claim 4, wherein the first buffer member (371) includes a rubber washer.

6. The electronic device of claim 1, further comprising a second buffer member (372) disposed between the second housing (202) and the rack (343, 443).

7. The electronic device of claim 1, wherein the pinion gear (342, 442) includes:
a 1-1th portion (342a, 442a), at least a portion of which is inserted into and fixed to the motor; and
a 1-2th portion (342b, 442b) protruding from at least a portion of the 1-1th portion and configured to be engaged with the rack (343, 443), and
wherein the 1-1th portion is rotatably connected to the gear bracket (345).

8. The electronic device of claim 7, wherein the driving structure (340, 440) includes a bearing (348a, 348b) disposed on the gear bracket (345) and rotatably supporting the 1-1th portion (342a).

9. The electronic device of claim 1, wherein the rack (343, 443) includes:
a 2-1th portion (343a) configured to be engaged with the pinion gear; and
a 2-2th portion (343b) connected to the 2-1th portion (343a) and having a width smaller than a width of the 2-1th portion (343a),
wherein the 2-1th portion (343a) and the 2-2th portion (343b) are integrally formed, and
wherein the guide groove (343c) is a stepped portion formed by a width difference between the 2-1th portion (343a) and the 2-2th portion (343b).

10. The electronic device of claim 9, wherein the guide groove support portion (345g) is configured to protrude from at least a portion of the gear bracket (345) to support the guide groove (343c).

11. The electronic device of claim 1, wherein at least a portion of the motor (341) and at least a portion of the gear bracket (345) are welded to each other.

12. The electronic device of claim 1, wherein the motor includes a fixing protrusion (341a) protruding from at least a portion thereof,
wherein the gear bracket (345) includes a fixing recess (345c) recessed from at least a portion thereof, and
wherein the fixing protrusion (341a) is inserted into the fixing recess (345c).

13. The electronic device of claim 1, further comprising a battery (289) disposed in the first housing (201) and configured to provide power to the motor (341).

14. The electronic device of claim 1, wherein the pinion gear (342, 442) and the rack (343, 443) include a helical gear (442).

15. The electronic device of claim 1, wherein the gear bracket (345) receives at least a portion of the pinion gear (342, 442) and at least a portion of the rack (343, 443).

## Patentansprüche

1. Elektronische Vorrichtung, umfassend:
ein erstes Gehäuse (201);
ein zweites Gehäuse (202), das dazu konfiguriert ist, in Bezug auf das erste Gehäuse verschoben zu werden;
eine rollbare Anzeige (203), die einen ersten Anzeigebereich (A1) und einen zweiten Anzeigebereich (A2) beinhaltet, der sich von dem ersten Anzeigebereich erstreckt, wobei mindestens ein Abschnitt des zweiten Anzeigebereichs dazu konfiguriert ist, basierend auf einer Schiebebewegung des zweiten Gehäuses in das erste Gehäuse eingezogen oder aus diesem herausgezogen zu werden; und
eine Antriebsstruktur (340, 440), die dazu konfiguriert ist, eine Antriebskraft zum Schieben des zweiten Gehäuses in Bezug auf das erste Gehäuse bereitzustellen, wobei die Antriebsstruktur Folgendes beinhaltet:
einen Motor (341), der in dem ersten Gehäuse angeordnet ist;
ein Ritzelzahnrad (342, 442), das mit dem Motor verbunden und dazu konfiguriert ist, sich in einer Richtung oder in einer anderen Richtung entgegengesetzt zu der einen Richtung basierend auf einer Antriebskraft des Motors zu drehen;
eine Zahnstange (343, 443), die in dem zweiten Gehäuse angeordnet ist und ein Zahnstangenzahnrad an einem oberen Abschnitt der Zahnstange (343, 443) und eine Führungsnut (343c) an einem unteren Abschnitt der Zahnstange (343) umfasst, wobei das Zahnstangenzahnrad dazu konfiguriert ist, mit dem Ritzelzahnrad in Eingriff gebracht zu werden; und
eine Zahnradhalterung (345), die einen Führungsnutstützabschnitt (345g) beinhaltet, der dazu konfiguriert ist, die Führungsnut (343c) der Zahnstange (343, 443) zu stützen, und an eine Seite des Motors (341) gekoppelt ist,
**dadurch gekennzeichnet, dass**
die Breite des oberen Abschnitts der Zahnstange (343) durch das Zahnstangenzahnrad definiert ist und die Breite des unteren Abschnitts der Zahnstange (343) geringer als die Breite des oberen Abschnitts der Zahnstange ist.

2. Elektronische Vorrichtung nach Anspruch 1, wobei die Zahnradhalterung (345) einen 1-1ten Kopplungsabschnitt (345a) und einen 1-2ten Kopplungsabschnitt (345b) beinhaltet, die an das erste Gehäuse (201) gekoppelt sind, und
wobei eine virtuelle erste gerade Linie, die den 1-1ten Kopplungsabschnitt (345a) und den 1-2ten Kopplungsabschnitt (345b) verbindet, parallel zu einer Schieberichtung des zweiten Gehäuses ist.

3. Elektronische Vorrichtung nach Anspruch 2, wobei die Zahnstange (343, 443) einen 2-1ten Kopplungsabschnitt (343d) und einen 2-2ten Kopplungsabschnitt (343e) beinhaltet, die an das zweite Gehäuse (202) gekoppelt sind, und
wobei eine virtuelle zweite gerade Linie, die den 2-1ten Kopplungsabschnitt (343d) und den 2-2ten Kopplungsabschnitt (343e) verbindet, parallel zu der virtuellen ersten geraden Linie ist.

4. Elektronische Vorrichtung nach Anspruch 1, ferner umfassend ein erstes Pufferelement (371), das zwischen dem ersten Gehäuse (201) und der Zahnradhalterung (345) angeordnet ist.

5. Elektronische Vorrichtung nach Anspruch 4, wobei das erste Pufferelement (371) eine Gummischeibe beinhaltet.

6. Elektronische Vorrichtung nach Anspruch 1, ferner umfassend ein zweites Pufferelement (372), das zwischen dem zweiten Gehäuse (202) und der Zahnstange (343, 443) angeordnet ist.

7. Elektronische Vorrichtung nach Anspruch 1, wobei das Ritzelzahnrad (342, 442) Folgendes beinhaltet:
einen 1-1ten Abschnitt (342a, 442a), von dem mindestens ein Abschnitt in den Motor eingesetzt und an diesem fixiert ist; und
einen 1-2ten Abschnitt (342b, 442b), der von mindestens einem Abschnitt des 1-1ten Abschnitts vorsteht und dazu konfiguriert ist, mit der Zahnstange (343, 443) in Eingriff gebracht zu werden, und
wobei der 1-1te Abschnitt drehbar mit der Zahnradhalterung (345) verbunden ist.

8. Elektronische Vorrichtung nach Anspruch 7, wobei die Antriebsstruktur (340, 440) ein Lager (348a, 348b) beinhaltet, das an der Zahnradhalterung (345) angeordnet ist und den 1-1ten Abschnitt (342a) drehbar stützt.

9. Elektronische Vorrichtung nach Anspruch 1, wobei die Zahnstange (343, 443) Folgendes beinhaltet:
einen 2-1ten Abschnitt (343a), der dazu konfiguriert ist, mit dem Ritzel in Eingriff gebracht zu werden; und
einen 2-2ten Abschnitt (343b), der mit dem 2-1ten Abschnitt (343a) verbunden ist und eine Breite aufweist, die kleiner als eine Breite des 2-1ten Abschnitts (343a) ist,
wobei der 2-1te Abschnitt (343a) und der 2-2te Abschnitt (343b) einstückig gebildet sind und
wobei die Führungsnut (343c) ein gestufter Abschnitt ist, der durch eine Breitendifferenz zwischen dem 2-1ten Abschnitt (343a) und dem 2-2ten Abschnitt (343b) gebildet ist.

10. Elektronische Vorrichtung nach Anspruch 9, wobei der Führungsnutstützabschnitt (345g) dazu konfiguriert ist, von mindestens einem Abschnitt der Zahnradhalterung (345) vorzustehen, um die Führungsnut (343c) zu stützen.

11. Elektronische Vorrichtung nach Anspruch 1, wobei mindestens ein Abschnitt des Motors (341) und mindestens ein Abschnitt der Zahnradhalterung (345) miteinander verschweißt sind.

12. Elektronische Vorrichtung nach Anspruch 1, wobei der Motor einen Fixierungsvorsprung (341a) beinhaltet, der von mindestens einem Abschnitt davon vorsteht,
wobei die Zahnradhalterung (345) eine Fixierungsaussparung (345c) beinhaltet, die von mindestens einem Abschnitt davon ausgespart ist, und
wobei der Fixierungsvorsprung (341a) in die Fixierungsaussparung (345c) eingesetzt ist.

13. Elektronische Vorrichtung nach Anspruch 1, ferner umfassend eine Batterie (289), die in dem ersten Gehäuse (201) angeordnet und dazu konfiguriert ist, dem Elektromotor (341) Leistung bereitzustellen.

14. Elektronische Vorrichtung nach Anspruch 1, wobei das Ritzelzahnrad (342, 442) und die Zahnstange (343, 443) ein Schrägzahnrad (442) beinhalten.

15. Elektronische Vorrichtung nach Anspruch 1, wobei die Zahnradhalterung (345) mindestens einen Abschnitt des Ritzelzahnrads (342, 442) und mindestens einen Abschnitt der Zahnstange (343, 443) aufnimmt.

## Revendications

1. Dispositif électronique, comprenant :
un premier boîtier (201) ;
un second boîtier (202) configuré pour coulisser par rapport au premier boîtier ;
une unité d'affichage enroulable (203) comprenant une première zone d'affichage (A1) et une seconde zone d'affichage (A2) s'étendant à partir de la première zone d'affichage, au moins une partie de la seconde zone d'affichage étant configurée pour être tirée dans le premier boîtier ou hors de celui-ci sur la base d'un mouvement de coulissement du second boîtier ; et
une structure d'entraînement (340, 440) configurée pour fournir une force d'entraînement pour le coulissement du second boîtier par rapport au premier boîtier, la structure d'entraînement comprenant :
un moteur (341) disposé dans le premier boîtier ;
un engrenage à pignons (342, 442) relié au moteur et configuré pour tourner dans une direction ou dans une autre direction opposée à la première direction sur la base d'une force d'entraînement du moteur ;
une crémaillère (343, 443) disposée dans le second boîtier et comprenant un engrenage à crémaillère au niveau d'une partie supérieure de la crémaillère (343, 443) et une rainure de guidage (343c) au niveau d'une partie inférieure de la crémaillère (343), ledit engrenage à crémaillère étant configuré pour être en prise avec l'engrenage à pignons ; et
un support d'engrenage (345) comprenant une partie de support de rainure de guidage (345g) configurée pour supporter la rainure de guidage (343c) de la crémaillère (343, 443) et accouplée à un côté du moteur (341),
**caractérisé en ce que**
la largeur de la partie supérieure de la crémaillère (343) est définie par l'engrenage à crémaillère et la largeur de la partie inférieure de la crémaillère (343) est inférieure à la largeur de la partie supérieure de la crémaillère.

2. Dispositif électronique de la revendication 1, ledit support d'engrenage (345) comprenant une partie d'accouplement 1-1 (345a) et une partie d'accouplement 1-2 (345b) accouplées au premier boîtier (201), et
une première ligne droite virtuelle reliant la partie d'accouplement 1-1 (345a) et la partie d'accouplement 1-2 (345b) étant parallèle à une direction de coulissement du second boîtier.

3. Dispositif électronique de la revendication 2, ladite crémaillère (343, 443) comprenant une partie d'accouplement 2-1 (343d) et une partie d'accouplement 2-2 (343e) accouplées au second boîtier (202), et
une seconde ligne droite virtuelle reliant la partie d'accouplement 2-1 (343d) et la partie d'accouplement 2-2 (343e) étant parallèle à la première ligne droite virtuelle.

4. Dispositif électronique de la revendication 1, comprenant en outre un premier élément tampon (371) disposé entre le premier boîtier (201) et le support d'engrenage (345).

5. Dispositif électronique de la revendication 4, ledit premier élément tampon (371) comprenant une rondelle en caoutchouc.

6. Dispositif électronique de la revendication 1, comprenant en outre un second élément tampon (372) disposé entre le second boîtier (202) et la crémaillère (343, 443).

7. Dispositif électronique de la revendication 1, ledit engrenage à pignons (342, 442) comprenant :
une partie 1-1 (342a, 442a), dont au moins une partie est insérée dans le moteur et fixée à celui-ci ; et
une partie 1-2 (342b, 442b) faisant saillie d'au moins une partie de la partie 1-1 et configurée pour être en prise avec la crémaillère (343, 443), et
ladite partie 1-1 étant reliée rotative au support d'engrenage (345).

8. Dispositif électronique de la revendication 7, ladite structure d'entraînement (340, 440) comprenant un palier (348a, 348b) disposé sur le support d'engrenage (345) et supportant rotative la partie 1-1 (342a).

9. Dispositif électronique de la revendication 1, ladite crémaillère (343, 443) comprenant :
une partie 2-1 (343a) configurée pour être mise en prise avec l'engrenage à pignons ; et
une partie 2-2 (343b) reliée à la partie 2-1 (343a) et présentant une largeur inférieure à une largeur de la partie 2-1 (343a),
ladite partie 2-1 (343a) et ladite partie 2-2 (343b) étant formées d'un seul tenant, et
ladite rainure de guidage (343c) étant une partie étagée formée par une différence de largeur entre la partie 2-1 (343a) et la partie 2-2 (343b).

10. Dispositif électronique de la revendication 9, ladite partie de support de rainure de guidage (345g) étant configurée pour faire saillie d'au moins une partie du support d'engrenage (345) pour supporter la rainure de guidage (343c).

11. Dispositif électronique de la revendication 1, au moins une partie du moteur (341) et au moins une partie du support d'engrenage (345) étant soudées l'une à l'autre.

12. Dispositif électronique de la revendication 1, le moteur comprenant une saillie de fixation (341a) faisant saillie d'au moins une partie de celui-ci,
ledit support d'engrenage (345) comprenant un évidement de fixation (345c) en retrait d'au moins une partie de celui-ci, et
ladite saillie de fixation (341a) étant insérée dans l'évidement de fixation (345c).

13. Dispositif électronique de la revendication 1, comprenant en outre une batterie (289) disposée dans le premier boîtier (201) et configurée pour fournir de l'énergie au moteur (341).

14. Dispositif électronique de la revendication 1, ledit engrenage à pignons (342, 442) et ladite crémaillère (343, 443) comprenant un engrenage hélicoïdal (442).

15. Dispositif électronique de la revendication 1, ledit support d'engrenage (345) recevant au moins une partie de l'engrenage à pignons (342, 442) et au moins une partie de la crémaillère (343, 443).
